# EUROPEAN PATENT APPLICATION

(11) **EP 2 320 327 A1**
(43) Date of publication of application: **11.05.2011**
(21) Application number: 10160036.9
(22) Date of filing: 15.04.2010
(51) Int. Cl.: G06F 13/40

(54) **A data transferring device**

(30) Priority: 09.11.2009 US 259441 P
(71) Applicant: IMEC, 3001 Leuven (BE)
(72) Inventor: Raghavan, Praveen, 620006 Tamil Nady (IN); Glassee, Miguel, 3540 Schullen (Herk-de-Stad) (BE)
(74) Representative: Hertoghe, Kris Angèle Louisa

(57) **Abstract**

The invention relates to a data transfer device (10) for transferring data on a platform, in particular for transferring simultaneous data between different components of the platform. A data transfer device is presented which is adapted for simultaneous transfer of data between at least 3 ports of which at least one is an input port (13, 14, 15) and at least one is an output port (16, 17, 18). The data transfer device (10) comprises at least two controllers (20, 21) for executing instructions that transfer data between an input port (13, 14, 15) and an output port (16, 17, 18). The controllers (20, 21) are adapted for receiving a synchronization instruction for synchronizing between the controllers (20, 21) and/or a synchronization instruction for synchronizing input ports (13, 14, 15) and output ports (16, 17, 18).

## Description

### FIELD OF THE INVENTION

The invention relates to a data transfer device for transferring data on a platform, in particular for transferring simultaneous data between different components of the platform.

### BACKGROUND OF THE INVENTION

The continuously growing variety of wireless standards and the increasing costs related to IC design and handset integration make implementation of wireless standards on reconfigurable radio platforms the only viable option in the near future.

In the concept of cognitive reconfigurable radio (CRR), various communication modes need to be supported. The required flexibility and high performance lead to heterogeneous multiprocessor platforms. With platform is meant the framework on which applications may be run. CRR is an effective way to provide the performance and flexibility necessary therefore. A cognitive radio, broadly defined, is a radio that can autonomously change its transmission and receive parameters based on interaction with and learning of the environment in which it operates. A more spectrum-centric definition denotes a radio that co-exists with other wireless systems using the same spectrum resources without significantly interfering with them (also referred to as opportunistic radio). Both are considered in parallel.

Another type of cognitive radio is a software-defined radio (SDR) system, which is a radio communication system where components that previously were implemented in hardware are now instead implemented using software on a computing system, such as for example an embedded computing device. A basic SDR system may comprise a computing device equipped with a sound card, or another analog to digital converter, preceded by some form of RF front end. Significant amounts of signal processing are handed over to a general purpose processor of the computing device, rather than being done in special-purpose hardware. Such a design produces a radio that can receive and transmit different radio protocols based solely on the software used.

The wireless standards in the scope of CRR or SDR are LTE evolutions, WLAN evolutions and broadcasting standards. The goal is to support 4G connectivity requirements which include support of 1Gbps and 100Mbps as well as support of 4x4 MIMO operations with advanced detection capabilities. The 3GPP LTE standard is a very flexible standard and dimensioning a platform largely depends on the mode subset supported by the platform. The interconnection bandwidth between the baseband engines and the front-end interfaces on the one hand and between the baseband engines and the outer modem blocks on the other hand both during reception and transmission, as well as the computational requirements for the baseband engines and the outer modem blocks largely depend on the envisioned communication modes. In the 802.11x set of standards, and more specifically in the 802.11 n standard, the functional requirements for the platform in terms of required interconnection bandwidth (between digital front-end interface and baseband engines on the one hand, and between the baseband engines and the outer modem blocks on the other hand), for the computation requirement of the inner and outer modem processing, depend on the chosen communication mode.

Most commonly, a bus infrastructure like for example AHB (Advanced High Performance Bus), AHB-Lite (a subset of the full AHB specification intended for use in designs where only a single bus master is used) or AXI (Advanced extensible Interface) are used as interconnection. Both in gate count as well as in programming paradigm, AXI and AHB are a bit heavy for what is needed. Further, predictability of the bus-architecture is also desired. For broadcasting from one source to multiple destinations this type of bus becomes complex and should even be avoided. Most interconnects in the art have one or more of the following problems:
- interconnect bandwidth is too small for Gbps standards;
- is not scalable towards more interfaces;
- inter-process communication between baseband processors is too expensive;
- central DMA (Direct Memory Access) controllers will double interconnect traffic;
- dataflow for address fully under control of ARM (Advanced Reduced Instruction Set Computer Machine) (for DMA controller programming);
- power consumption;
- predictability.

Also another common technique is point to point connection which is not flexible enough for different parallelization schemes.

### SUMMARY OF THE INVENTION

It is an object of embodiments of the present invention to provide a device for energy and latency efficient communication between different components on a platform

The above objective is accomplished by a method and device according to the present invention.

The present disclosure provides a data transfer device adapted for simultaneous transfer of data between at least 3 ports of which at least one is an input port and at least one is an output port. The data transfer device comprises at least two controllers (IC1, IC2) for executing instructions that transfer data between an input and an output port. The controllers are adapted for receiving a synchronization instruction for synchronizing between the controllers and/or a synchronization instruction for synchronizing input and output ports.

In an embodiment, each controller is connected to one output port.

In embodiments of the present invention, the data transfer device comprises at least two program memories for storing transfer instructions. The data transfer device may comprise as many program memories as there are controllers.

In an embodiment, the data transfer device further comprises a controller interface for programming the at least two program memories.

The proposed device provides an efficient and predictable device of synchronized and un-synchronized communication between different components on the platform. The device supports efficient communication between multiple cores with low, predictable latency as well as power. Furthermore, multiple streams, even of multiple (transmit and/or receive) standards, can run in parallel with the required freedom to be provided to ensure different code parallelization strategies between the different cores. A distributed and programmable stream control architecture is presented that can manage multiple synchronous or asynchronous communication streams in parallel. Flow control is implemented between source and destination as well as between streams.

It is an advantage of embodiments of the present invention that they may be used when designing a reconfigurable platform solution that supports CRR and SDR systems. The platform may support co-existence of multiple standards and the handover between the standards. At baseband level, the flexibility is provided to support this during run-time by run-time reconfiguration of the platform, so that any change in parallelism/mode of operation at run-time can be obtained.

Particular and preferred aspects of the invention are set out in the accompanying independent and dependent claims. Features from the dependent claims may be combined with features of the independent claims and with features of other dependent claims as appropriate and not merely as explicitly set out in the claims.

### BRIEF DESCRIPTION OF THE DRAWINGS

Illustrative embodiments are described below in conjunction with the appended drawing figures, wherein like reference numerals refer to like elements in the various figures, and wherein:
Fig.1 illustrates a transfer device comprising a crossbar and an interconnect controller according to an embodiment of the present invention.
Fig.2 illustrates a platform template comprises a transfer device according to an embodiment of the present invention.
Fig.3 gives an overview of an interconnect block according to embodiments of the present invention.
Fig.4 shows the internals of the interconnect block of Fig. 3.

The drawings are only schematic and are non-limiting. In the drawings, the size of some of the elements may be exaggerated and not drawn on scale for illustrative purposes.

Any reference signs in the claims shall not be construed as limiting the scope.

### DETAILED DESCRIPTION OF ILLUSTRATIVE EMBODIMENTS

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.

A data transfer device 10 is presented which is adapted for simultaneous transfer of data on a platform. The data transfer device 10 serves as an interconnect between different components of a platform; e.g. the interconnect between the baseband engines (e.g. CGA) 12 and the front-end interfaces (e.g. DFE) 11 on the one hand and between the baseband engines 12 and the outer modem blocks (e.g. FEC) 12. In particular, the data transfer device 10 comprises at least three ports of which at least one is an input port, e.g. ports 13, 14, 15 in the embodiment illustrated, and at least one is an output port, e.g. ports 16, 17, 18 in the embodiment illustrated. The data transfer device 10 comprises at least two controllers 20, 21 for executing instructions that transfer data between an input port 13, 14, 15 and an output port 16, 17, 18. The intelligence of the data transfer device 10 according to embodiments of the present invention is in the programmable interconnect controllers 20, 21. The controllers 20, 21 are adapted for receiving a synchronization instruction for synchronizing between the controllers 20, 21 and/or a synchronization instruction for synchronizing input ports 13, 14, 15 and output ports 16, 17, 18.

Possible types of data flows between the different components are for example (the example for illustration purposes only being specific to an SDR platform):
- between front-end interfaces: control flow, no data flow
- between front-end interface and baseband engine: data flow, control flow
- between baseband/inner modem engines: data flow, control flow
- between baseband/inner modem engine and outer modem block: data flow, no control flow
- between outer modem blocks: no control flow, no data flow

The proposed transfer device 10 according to embodiments of the present invention provides an efficient and predictable device of synchronized and un-synchronized communication between different components on the platform. The transfer device 10 supports efficient communication between multiple cores with low, predictable latency as well as power. Furthermore, multiple streams can run in parallel with the required freedom to be provided to ensure different code parallelization strategies between the different cores. Multiple streams may be multiple transmit or receive streams or both. A distributed and programmable stream control architecture is presented that can manage multiple synchronous or asynchronous communication streams in parallel. Flow control is implemented between source and destination as well as between streams. Distributed control mechanism also refers to the possibility to decouple data and control traffic and/or to decouple data traffic to avoid reuse of the interconnect.

One of the biggest changes compared to the previous generation platform is the addition of a custom interconnect for data communication between the different cores. In wireless CRR (cognitive reconfigurable radio) /SDR (software defined radio) systems data and control communication between different components are known at design time. Using a DMA to perform the traffic not only requires the ARM processor to program it at a very fine granularity (every symbol or few symbols), but also doubles the traffic on the bus.

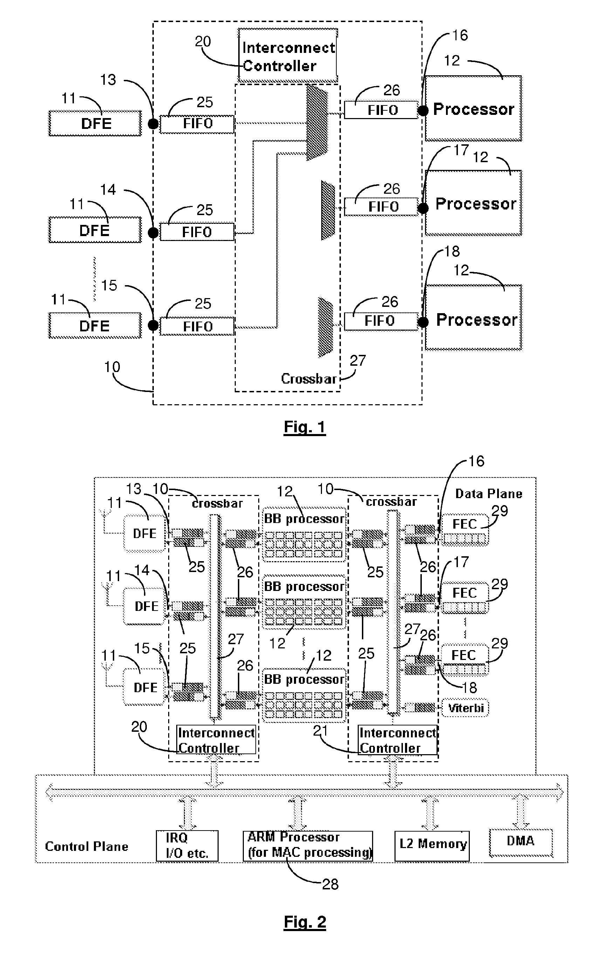

Fig. 1 shows the proposed data transfer device 10 for the platform. The platform is illustrated in Fig. 2.

The platform according to embodiments of the present invention as illustrated in FIG.2 is different from prior art platforms by the split between the data communication/computation and the control on the platform. Three different functional blocks can be extracted in the data plane:
1. Synchronization/sensing (DFE) 11: a first digital block responsible for interfacing with the analog front end (setting the gain for the ADC), performing the coarse time synchronization (for WLAN and LTE) and performing spectrum sensing for coexistence or handover and allow the use of spectrum "white space"
2. Baseband processing 12: the baseband processors may support multi-threading
3. Decoding processor (FEC) 29: a processor capable of performing different types of decoding, e.g. both LDPC decoding and Turbo decoding.
Each of these different functions can be mapped onto ASIPs which are capable of performing these tasks efficiently. The data communication between these processors may be handled using a custom interconnect fabric.

The control plane architecture has different functions: exchanging state information and control data between different processing units in the data path, and configuring the different processing cores in the data path to setup a burst. The control processor 28 may be solely responsible for packet level control. It may set up the data plane to process a complete packet and may only be interrupted when data is available that is useful for the software PHY layer or MAC layer.

The data transfer device 10 according to embodiments of the present invention is a custom interconnect for data communication between different cores on the platform. It comprises FIFOs 25, 26 connected to a crossbar 27. The FIFOs 25, 26 allow having flow control over the complete transmit or receive chain. The FIFOs 25, 26 can have any suitable implementation, for example they can be implemented as software or as hardware, or even just as memories. In case of memories, the interconnect controller acts as a DMA with its own program to transfer data at appropriate moments in time from source to destination over the data transfer device 10. Because of the decentralized control by means of interconnect controllers 20, 21, the control processor 28 of the platform can program the interconnect controllers 20, 21 for a complete burst of symbols. This allows the data flow to be setup and running during the burst itself without any further intervention. This implies that only cores that need to communicate with each other can do so (just enough flexibility).

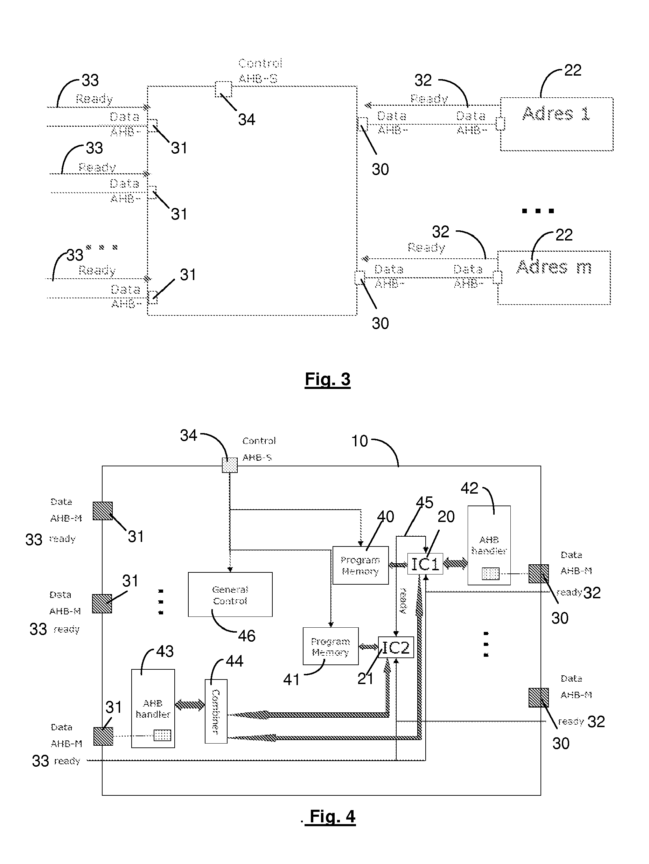

Advantages of the data transfer device 10 according to embodiments of the present invention include decoupled data and control traffic between the different cores on the platform, flow control, flexibility, low power consumption, high throughput and low latency interconnect, reduction of the load of the control processor 28 of the platform to reprogram transfers. The low power consumption may be obtained because the data transfer device 10 may act as a dedicated control for transfer of data between components, thus ensuring that timing of this transfer and amount of data transferred is appropriate. A low latency interconnect may be obtained by FIFO connections 25, 26 at either end of the crossbar 27. Low latency may furthermore be obtained by programmability of the data transfer device 10, such that the transfer can be timed when the throughput would be high, such that latency of the transfer is minimized. Fig. 3 shows a high level overview of the data transfer device 10 with its interfaces. On one side (right in the figure), it connects to the baseband processors 12, on the other side (left in the figure), it connects to other peripherals, typically the DFE 11 or Diffs for one instantiation (not illustrated in Fig. 3 but visible in Fig. 1 and FIG.2, the outer modem blocks (FlexFEC, legacy Viterbi engine, scrambler/descrambler engine). For this example, the data transfer device 10 has a parametrical amount of AHBLite master interfaces 30 to interface with the baseband engines 12, and a parametrical amount of AHBLite master interfaces 31 to connect with the other peripherals. It is to be noted that any other interface known to the person skilled in the art can also be used. Next to each of the AHBLite interfaces, a "ready" signal 32, 33 from the baseband engines 12 or the peripherals to the data transfer device 10 is available for handshaking between the interconnect controller 20, 21 and the baseband engine 12 or the peripheral. There is also provided a slave interface 34 used for general control of the data transfer device 10, including programming the internal interconnect controller 20, 21.

Fig. 4 shows the internals of the data transfer device 10. The intelligence of the data transfer device 10 is in the programmable interconnect controllers 20, 21, one for every baseband it is connected to. These interconnect controllers 20, 21 each have a program memory 40, 41 that can be loaded through the control interface 34. For every master interface 30, 31, there may be a block (the AHBhandler module) 42, 43 responsible for interfacing with it. Such block 42, 43 is specific to a particular protocol used. If such block is not needed for a particular protocol, an address may be placed on a data bus directly. On the baseband side, every interconnect controller 20 connects directly to this AHBhandler 42 of one interface port 30. On the other side, every AHBhandler 43 is connected to a combiner block 44, that combines the signals of the different interconnect controllers 20, 21 to consistently interface with the AHBhandler 43. The "ready" signals 32 of the baseband engines 12 are connected to the interconnect controller 20 that interfaces with it, the "ready" signals 33 of the left hand side (peripherals) interfaces are connected to all interconnect controllers 20, 21. During synchronisation between source and destination, the source has to make sure that data is ready, and the destination has to make sure that space is available for receiving the data. Every interconnect controller 20, 21 also generates a "ready" signal 45, that is connected to all other interconnect controllers 21, 20. The "ready" signals 45, 32, 33 from other interconnect controllers, as well as from the baseband engines 12 and from the other peripherals, can be used to synchronise through special synchronisation commands in the interconnect controllers' programs. The "ready" signal 45 provides handshaking between interconnect controllers 20 and 21, and indicates that data has gone (or has not yet gone) before new data is sent. When data dealt with in the transfer device 10 at the left hand side of the data plane of Fig. 2 is dependent on data dealt with in the transfer device 10 at the right hand side of the data plane of Fig. 2, the synchronisation signal 45 is used; if both pieces of data are independent, there is no need to use the synchronisation signal. Furthermore, there is a general control block 46 allowing the platform controller 28 to control the interconnect controllers 20, 21. It is to be noted that all blocks are clocked, except the combiner block 44. The combiner block 44 is purely combinatorial logic, which ensures that the latency behaviour on both sides of the interconnect controllers 20, 21 is identical. It is also to be noted that it is possible that all interconnect controllers 20, 21 can access all the ahb interfaces 31 to periphery other than the baseband engines (on the left hand side of Fig. 4). This implicates that more than one interconnect controller 20, 21 can access the same ahb interface 31 in an incompatible way (e.g. two writes or a read and write). In particular embodiments of the present invention, the hardware (e.g. the combiner block 44) detects this as an error that is signalled to general control, which can report the error. In particular embodiments of the present invention, no conflict resolution is implemented; the programmer should avoid this situation.

The details of the interfaces 30, 31 between the different blocks are now specified. Table 1 describes the AHBhandler module interface.

**Table 1: AHBhandler interface description**

| Name | Direction | Size (bits) | Purpose |
|---|---|---|---|
| clk | In | 1 | Clock (should match the bus clock). |
| address | In | 32 | Address to be used on the data transfer device 10 (typically baseband address). Used for read and write transactions. |
| read | In | 1 | Request a read on the data transfer device 10. |
| write | In | 1 | Request a write on the data transfer device 10. |
| writedata | In | 32 | Data to be written (if write = 1). |
| accept | Out | 1 | Signals that transactions are being accepted. |
| readdata | Out | 32 | Data that was read from the interface (if produce = 1). |
| produce | Out | 1 | Read data is available. |
| consume | In | 1 | Signal that the read data is being consumed and can be removed from the fifo. |

It is to be noted that the read and write signals are mutually exclusive; asserting both in the same clock cycles causes an error. The writedata is only relevant if a write transaction is requested (i.e. if write is asserted) and the readdata is only valid if produce is asserted. The address is used if read or write is asserted. If the AHBhandler 42, 43 de-asserts the accept signal, the read or write request (if any) on the data transfer device 10 is not being handled in this clock cycle and should not be overwritten with a next one until the accept signal is asserted again. The consume signal can be de-asserted to prevent the AHBhandler 42, 43 from removing data from its fifo. By doing so, the AHBhandler module 42, 43 will keep offering the readdata until the consume signal is asserted again. The produce signal is set by the AHB handler 42, 43 if readdata is being produced (a data valid signal).

### Instruction set

Table 2 shows the instruction set of the interconnect controllers 20, 21. The first 4 instructions (with opcode 0 to 3) are control constructs that do not cause data to be transferred. The last 4 instruction (with opcode 4 to 7) cause data to be transferred on the data transfer device 10. One instruction (LOADCONST) takes an operand on the next program line, that is also a 16-bit word.

**Table 2: Interconnect controller instruction set**

| OPC | Instruction | Purpose |
|---|---|---|
| 0 | SYNC | Synchronize with other parts in the platform |
| 1 | JUMPNZ | If associated counter is greater than 0, jump and decrement |
| 2 | LOADBB | Load baseband start address and increment value |
| 3 | LOADCNT | Load value in associated counter |
| 4 | LOADCONST | Load operand in MSB or LSB of constant register |
| 5 | INSCONST | Insert constant in baseband memory or fifo |
| 6 | FIFO2NULL | Remove data from fifo |
| 7 | XFER | Transfer data from fifo to baseband memory or vice versa |

### Details of instructions

In this section, the coding of the individual instructions is presented, together with a more detailed description of the behaviour of the instruction. As a general remark, instructions are coded in 16-bit words, of which the most significant three bits denote the instruction's opcode as presented in Table 2.

### SYNC

The "SYNC" instruction can be used for synchronisation purposes. Its format is depicted in Table 3. The opcode for this instruction is 0, the other parameters are:
• Set Ready: Set the "ready" signal 45 of the interconnect controller 20, 21, so that other interconnect controllers 21, 20 can continue operation after waiting for the ready signal 45 of this interconnect controller 20, 21.
• Fifo ID: identifier of the fifo 25, 26 to synchronize with if fifo is set. In this case, the interconnect controller 20, 21 blocks on this sync instruction until the fifo 25, 26 sets its "ready" signal.
• IC ID: identifier of the interconnect controller 20, 21 to synchronize with if IC is set. In this case, the interconnect controller 20, 21 blocks on this instruction until the other interconnect controller 21, 20 sets its "ready" signal 45 (i.e. runs a sync instruction with the "Set Ready" parameter set).
• Fifo: If set, synchronise with fifo 25, 26 with identifier given by the "Fifo ID" parameter. If not set, this parameter is ignored and no synchronisation with a fifo is performed.
• IC: If set, synchronise with interconnect controller 20, 21 with identifier given by the "IC ID" parameter. If not set, this parameter is ignored and no synchronisation with another interconnect controller is performed.
• BB: If set, synchronise with the baseband engine 12 this interconnect controller 20, 21 is connected to. If not set, no synchronisation with the baseband engine is performed.
• Clear Fifo: If set, the "ready" signal of the fifo 25, 26 with identifier "Fifo ID" is cleared, else it is not changed.
• Clear IC: If set, the "ready" signal 45 of the interconnect controller 20, 21 with identifier "IC ID" is cleared, else it is not changed.
• Clear BB: If set, the "ready" signal 32 of the baseband engine 12 is cleared, else it is not changed.

**Table 3: SYNC; instruction encoding**

| | | | | | | | | | |
|---|---|---|---|---|---|---|---|---|---|
| OPC (15-13) = 0 | Set Ready | Fifo ID | IC ID | Fifo | IC | BB | Clear | Clear | Clear |
| | (12) | (11-8) | (7-6) | (5) | (4) | (3) | Fifo (2) | IC (1) | BB (0) |

A special note is required for the SYNC instruction with all parameters set to 0. This instruction, coded as 0, triggers no functionality at all in the interconnect controller 20, 21. It will stall at this instruction until the instruction is reloaded with non-zero instruction data. It is to be noted that this instruction has no significance for synchronisation anyway.

### JUMPNZ

The "JUMPNZ" instruction checks whether a counter has reached 0. If so, program execution continues with the next program line, if not, the counter is decremented and program execution is continued at a new location. Together with the "LOADCNT" instruction, this instruction provides for iterations in the program. The number of nested operations is limited by the amount of counters available. The instruction encoding provides 3 bits for the counter identifier, so the maximum amount of counters is 8. Table 4 shows the encoding of the "JUMPNZ" instruction. Its opcode is 1, the other parameters are:
- Counter ID: identifier of the counter to use.
- Location: Program line to jump to if the counter does not equal zero.

**Table 4: JUMPNZ instruction encoding**

| | | |
|---|---|---|
| OPC (15-13) = 1 | Counter ID (12-10) | Location (9-0) |

### LOADBB

The "LOADBB" loads the initial parameters to be used for accessing the baseband 12 (with the "XFER" and "INSCONST" instructions). It sets an initial address and an increment value for this address. Its encoding is shown in Table 5. Its opcode is 2, the other parameters are:
- Increment: the amount (in words), the baseband address should be incremented with after an access to the baseband 12 (i.e. an "XFER" instruction or a "INSCONST" instruction with parameter "ToBB" set). It is a 3-bit value, so it is a value for 0 to 7 words, or 0 to 28 bytes in steps of 4 bytes.
- Baseband address: the initial value of the baseband address in words. This address will be used for the first access to the baseband processor 12. It is limited to 10 bits, so the initial address should be within the first 1K words of the baseband memory, or with the first 4K bytes.

It is to be noted that both parameters are in words; to obtain the byte address, two zero bits should be added.

**Table 5: LOADBB instruction encoding**

| | | |
|---|---|---|
| OPC (15-13) = 2 | Increment (12-10) | Baseband address (9-0) |

### LOADCNT

The "LOADCNT" instruction loads a value into a counter. Together with the "JUMPNZ" instruction, it can be used to insert iterations in a program. Its encoding is shown in Table 6. Its opcode is 3, the other parameters are:
- Counter ID: identifier of the counter to be loaded
- Value: The value the counter should be initialized with. It is a 10-value, meaning that the maximum amount of iterations in a single loop is 1023.

**Table 6: LOADCNT instruction encoding**

| | | |
|---|---|---|
| OPC (15-13) = 3 | Counter ID (12-10) | Value (9-0) |

### LOADCONST

The "LOADCONST" instruction is used to load the constant to be used by the "INSCONST" instruction to insert a constant value in the baseband memory or a fifo. The constant is a 32-bit constant, of which the "LOADCONST" instruction can initialise the 16 LSB's or the 16 MSB's. It takes two "LOADCONST" instructions to load the complete 32-bit constant. The "LOADCONST" takes a 16-bit operand on the next program line. The encoding of the "LOADCONST" instruction is shown in Table 7. Its opcode is 4, the other parameter is:
• MSB: If set, the operand will be loaded in the 16 MSB's of the constant, else in the 16 LSB's.

**Table 7: LOADCONST instruction encoding**

| | | | |
|---|---|---|---|
| OPC (15-13) = 4 | Reserved (12-8) | MSB (7) | Reserved (6-0) |

### INSCONST

The "INSCONST" instruction inserts a number of times the value previously loaded with the "LOADCONST" instruction in the baseband memory or in a FIFO. It always inserts 32-bit values, but depending on settings part of it can be 0. This can e.g. be used to add a signature to a number of datawords transferred, to allow the baseband processor 12 to detect that all required input data is available and that it can start. Its encoding is shown in Table 8. It has opcode 5, the other parameters are
• ToBB: if set, the constant is inserted in the baseband processor memory, using the current baseband parameters (as set by the "LOADBB" instruction, and possibly altered by previous "XFER" or "INSCONST" instructions). If not set, the constant is inserted in the fifo with identifier given by the parameters "Fifo ID"
• Fifo ID: identifier of the fifo to insert data into if the parameter "ToBB" is unset. If the parameter "ToBB" is set, this parameter is ignored.
• MSB: if set, the 16 MSBs of the constant are used, meaning that the 16 MSBs of the value that is inserted are equal to the operand of the last "LOADCONST" instruction with the "MSB" parameter set. If this parameter is not set, the 16 MSBs are replaced with zeros.
• LSB: if set, the 16 LSBs of the constant are used, meaning that the 16 LSBs of the value that is inserted are equal to the operand of the last "LOADCONST" instruction with the "MSB" parameter not set. If this parameter is not set, the 16 LSBs are replaced with zeros. If both LSB and MSB are unset, 32-bit values with all zeros will be inserted.
• Count: the amount of times the constant should be inserted. This is a 6-bit value, so it is in the range 0 to 63.

**Table 8: INSCONST instruction encoding**

| | | | | | |
|---|---|---|---|---|---|
| OPC (15-13) = 5 | ToBB (12) | Fifo ID (11-8) | MSB (7) | LSB (6) | Count (5-0) |

### FIFO2NULL

The "FIFO2NULL" instruction removes an amount of datawords from a fifo 25, 26 and discards them. The instruction encoding is shown in Table 9. It has opcode 6, the other parameters are:
• Fifo ID: identifier of the fifo 25, 26 from which data should be read and removed.
• Count: Amount of datawords to be removed. This is a 8-bit value, so the range is 0 to 255.

**Table 9: FIFO2NULL instruction encoding**

| | | | |
|---|---|---|---|
| OPC (15-13) = 6 | Reserved (12) | Fifo ID (11-8) | Count (7-0) |

### XFER

The "XFER" instruction moves an amount of datawords from the baseband memory to a fifo 25, 26 or vice versa. The instruction encoding is shown in Table 10. Its opcode is 7, the other parameters are:
- ToBB: if set, the transfer direction is from fifo 26 to baseband 12 (i.e. datawords are read out of the fifo 26 and written into the baseband memory). If not set, the transfer direction is from baseband 12 to fifo 26 (i.e. datawords are read out of the baseband memory, and written into the fifo 26)
- Fifo ID: identifier of the fifo 26 from which data is read (if parameter "ToBB" is set) or to which data is written (if parameter "ToBB" is not set).
- Count: Amount of datawords to be be transferred, an 8-bit value, so its range is 0 to 255.

It is to be noted that this instruction always involves the baseband processor parameter, so the baseband address is incremented with the baseband increment specified by the last "LOADBB" instruction after every dataword transfer.

**Table 10: XFER instruction encoding**

| | | | |
|---|---|---|---|
| OPC (15-13) = 7 | ToBB(12) | Fifo ID (11-8) | Count (7-0) |

### Examples

Two examples of code to be loaded into an interconnect controller in accordance with embodiments of the present invention are given below. It should be noted both these examples show a trade-off between throughput and latency.

### SAMPLE CODE 1

LOADBB 0 1 ; initialize registers
LOADCNT 1 1
OLOOP
LOADCNT 0 3 ; inner loop
ILOOP
XFER 1 0 40 ; transfer 40 samples from source 0 to destination 1
XFER 1 1 40 ; transfer 40 samples from source 1 to destination 1
XFER 1 2 40 ; transfer 40 samples from source 2 to destination 1
XFER 1 3 40 ; transfer 40 samples from source 3 to destination 1
JUMPNZ 0 ILOOP ; Loop over
JUMPNZ 1 OLOOP ; Outer loop
STOP
LOADCNT 0 1
JUMPNZ 0 STOP

The above code illustrates how transfers happen from 4 sources to one destination in chunks of 40 elements. Each 'XFER' instruction transfers 40 elements from one source to another destination in the above code. These transfers are in a (inner) loop of size 4 (0 to 3), possibly this allows a total of 160 elements transfers from source 0 to destination 1. It can be noted that in steady state, a steady set of transfers can be done with high speed. These fine grain transfers allow to hide the latency of the transfer making it quite efficient such that the buffers at the source side can be kept small.

### SAMPLE CODE 2

; process with gcc -E -P before passing to the assembler
LOADBB 0 1
LOADCNT 1 1
OLOOP
XFER 1 0 160 ; Transfer of 160 elements from source 0 to destination 1
XFER 1 1 160 ; Transfer of 160 elements from source 1 to destination 1
XFER 1 2 160 ; Transfer of 160 elements from source 2 to destination 1
XFER 1 3 160 ; Transfer of 160 elements from source 3 to destination 1
JUMPNZ 1 OLOOP
STOP
LOADCNT 0 1 ; inner Loop of size 1
JUMPNZ 0 STOP

The above source code shows a coarser set of transfers from sources 0 to 3 to the destination port compared to example 1. There is a loop of only count 1, such that there is effectively only 4 transfers each of 160 elements from the source to a destination. Although the first transfer takes more cycles (due to setups at the source 0), the following transfers are quite efficient. The interconnect controller 20 waits for the source 0 to be ready before the transfers are made, therefore an extra number of cycles is required. This mode of transfer does higher throughput as much more data is transferred per instruction, however there is more latency for transferring data from source 3.

## Claims

1. A data transfer device (10) adapted for simultaneous transfer of data between at least three ports of which at least one is an input port (13, 14, 15) and at least one is an output port (16, 17, 18), the data transfer device (10) comprising at least two controllers (20, 21) for executing instructions that transfer data between an input port (13, 14, 15) and an output port (16, 17, 18), the controllers (20, 21) being adapted for receiving a synchronization instruction (45) for synchronizing between the controllers (20, 21) and/or a synchronization instruction (32, 33) for synchronizing input and output ports.

2. A data transfer device (10) according to claim 1, wherein each controller (20, 21) is connected to one output port.

3. A data transfer device (10) according to any of the previous claims, the device (10) furthermore comprising at least two program memories (40, 41) for storing transfer instructions.

4. A data transfer device (10) according to claim 3, the device (10) comprising as many program memories (40, 41) as there are controllers (20, 21).

5. A data transfer device (10) according to any of claims 3 or 4, the device (10) further comprising a controller interface (34) for programming the at least two program memories (40, 41).

## Amended claims

### Amended claims in accordance with Rule 137(2) EPC.

**1.** A data transfer device (10) adapted for simultaneous transfer of data between at least three ports of which at least one is an input port (13, 14, 15) and at least one is an output port (16, 17, 18), the data transfer device (10) comprising at least two controllers (20, 21) for executing instructions that transfer data between an input port (13, 14, 15) and an output port (16, 17, 18), the data transfer device (10) being **characterized in that** the controllers (20, 21) are adapted for receiving a synchronization instruction (32, 33) for synchronizing between input and output ports.

**2.** A data transfer device (10) according to claim 1, wherein the controllers are adapted for receiving a synchronization instruction (45) for synchronizing between the controllers (20, 21).

**3.** A data transfer device (10) according to any of the previous claims, wherein each controller (20, 21) is connected to one output port.

**4.** A data transfer device (10) according to any of the previous claims, the device (10) furthermore comprising at least two program memories (40, 41) for storing transfer instructions.

**5.** A data transfer device (10) according to claim 4, the device (10) comprising as many program memories (40, 41) as there are controllers (20, 21).

**6.** A data transfer device (10) according to any of claims 4 or 5, the device (10) further comprising a controller interface (34) for programming the at least two program memories (40, 41).

**7.** Use of a data transfer device (10) according to any of the previous claims as an interconnect between front-end interfaces (11) and baseband engines (12).

**8.** Use of a data transfer device (1) according to claim 7, wherein the data transfer device (10) is furthermore used as an interconnect between baseband engines and outer modem blocks (29).
